# FASCICULE DE BREVET EUROPEEN

(11) **EP 3 618 187 B1**
(45) Date de publication et mention de la délivrance du brevet: **30.09.2026**
(21) Numéro de dépôt: 19194592.2
(22) Date de dépôt: 30.08.2019
(51) Int. Cl.: H01Q 9/18, H01Q 19/10, H01Q 9/28, H01Q 25/00

(54) **DISPOSITIF ANTENNAIRE COMPACT**
KOMPAKTE ANTENNENVORRICHTUNG
COMPACT ANTENNA DEVICE

(30) Priorité: 31.08.2018 FR 1857848
(43) Date de publication de la demande: 04.03.2020
(73) Titulaire: Commissariat à l'Energie Atomique et aux Energies Alternatives, 75015 Paris (FR)
(72) Inventeur: BATEL, Lotfi, 38054 Grenoble cedex 09 (FR); CLEMENTE, Antonio, 38054 Grenoble cedex 09 (FR); DELAVEAUD, Christophe, 38054 Grenoble cedex 09 (FR)
(74) Mandataire: INNOV-GROUP

(56) Documents cités:
- WO-A1-2015/147906
- US-A1- 2002 171 599
- US-A1- 2004 027 304
- US-A1- 2005 040 994
- US-A1- 2007 152 903
- US-A1- 2010 141 530
- US-A1- 2014 313 080

## Description

### Domaine technique

L'invention se rapporte au domaine technique des dispositifs antennaires compactes. Le dispositif antennaire peut former une antenne directive à dépointage de faisceau, ou bien former une antenne reconfigurable. Les documents US 2014/313080 A1 et US 2010/141530 A1 sont considérés comme appartenant à l'état de la technique utile pour la compréhension de l'invention.

### Définitions

Par « compact », on entend que la dimension caractéristique maximale du dispositif antennaire est inférieure ou égale à λ/2, où λ est la longueur d'onde de fonctionnement du dispositif.

Par « directive », on entend la capacité d'une antenne à concentrer l'énergie rayonnée dans un angle solide ou dans une direction spécifique. Cette capacité, exprimée en dBi (décibel isotrope), est définie comme la valeur maximale du rapport entre la puissance rayonnée par unité d'angle solide et la puissance rayonnée moyenne sur toutes les directions de l'espace.

Par « super-directive », on entend que l'antenne présente une directivité dépassant une limite de référence telle que la limite maximale théorique d'Harrington.

Par « dépointage de faisceau », on entend que le diagramme de rayonnement de l'antenne (appelé également faisceau) peut être dirigé suivant une direction de pointage avec un balayage angulaire, par exemple sur 360° dans un plan azimutal. L'azimut est l'angle dans le plan horizontal entre la direction du faisceau et une direction de référence.

Par « reconfigurable », on entend qu'au moins une caractéristique de l'antenne peut être modifiée au cours de sa durée de vie, après sa fabrication. La ou les caractéristiques généralement modifiables sont la réponse fréquentielle (en amplitude et en phase), le diagramme de rayonnement, et la polarisation du champ électromagnétique.

L'invention trouve notamment son application dans l'internet des objets IoT (acronyme pour *« Internet of Things »),* la spatialisation des communications sans-fil, les lecteurs de radio-identification RFID *(« Radio Frequency IDentification »),* les équipements de compatibilité électromagnétique CEM, les radars etc.

### Etat de la technique antérieure

Un dispositif antennaire connue de l'état de la technique, notamment du document H. Kawakami et al., « Electrically steerable passive array radiator (ESPAR) antennas », IEEE Antennas and Propagation Magazine, vol. 47, n°2, 43-50, 2005, (ci-après D1) comporte :
- un plan de masse, sur lequel est appliqué un potentiel électrique de référence ;
- un ensemble d'antennes de type monopole, s'étendant sur le plan de masse, et comprenant :
   un monopole central, situé au centre du plan de masse,
   trois couples de monopoles périphériques, agencés autour du monopole central selon une symétrie centrale ;
- une jupe, s'étendant sous le plan de masse (i.e. à l'opposé des monopoles) ;
- un câble coaxial, agencé à travers le plan de masse et la jupe pour alimenter le monopole central.

Un tel dispositif de l'état de la technique est compact. En effet, les monopoles présentent une hauteur de λ/4 et le plan de masse, circulaire, présente un diamètre de λ/2. La finitude spatiale du plan de masse (i.e. de dimension finie) possède un inconvénient vis-à-vis du diagramme de rayonnement de l'antenne. En effet, le plan de masse génère un dépointage du diagramme de rayonnement de l'antenne d'un certain angle d'élévation (83° mentionné dans D1). Par conséquent, le gain de l'antenne n'est pas maximal dans le plan azimutal. C'est pourquoi D1 a introduit une jupe, de hauteur λ/4, dans le prolongement du plan de masse afin de réduire l'angle d'élévation (de 20°), et par là-même d'augmenter le gain (de 1,6 dB) dans le plan azimutal.

Toutefois, un tel dispositif de l'état de la technique n'est pas entièrement satisfaisant dans la mesure où l'introduction de la jupe a augmenté considérablement la taille de l'antenne (d'un facteur 2 pour l'épaisseur).

### Exposé de l'invention

L'invention vise à remédier en tout ou partie aux inconvénients précités. A cet effet, l'invention a pour objet un dispositif antennaire, comportant :
- un plan de masse, à potentiel flottant ;
- au moins une antenne dipolaire, s'étendant à travers le plan de masse, et comprenant des premier et second brins s'étendant de part et d'autre du plan de masse ;
- un circuit de commande, agencé sur le plan de masse pour commander la ou chaque antenne dipolaire.

Ainsi, un tel dispositif selon l'invention peut demeurer compact tout en conservant un gain maximal dans le plan azimutal (i.e. le plan défini par le plan de masse), et ce grâce aux premier et second brins de la ou chaque antenne dipolaire qui s'étendent de part et d'autre du plan de masse. En effet, une telle configuration géométrique des brins permet de limiter la perturbation du diagramme de rayonnement de l'antenne dipolaire correspondante par le plan de masse, et ce malgré la finitude spatiale du plan de masse.

En outre, le fait d'agencer le circuit de commande sur le plan de masse permet de limiter la perturbation du diagramme de rayonnement par les composants du circuit (et les métallisations -pistes et plots de connexion-), et ainsi d'autoriser la super-directivité du dispositif selon l'invention en présence d'un réseau d'antennes dipolaires.

### Définitions

- Par «potentiel flottant », on entend que le plan de masse n'est pas soumis à un potentiel électrique de référence à la ou aux fréquence(s) de fonctionnement du dispositif.
- Par « à travers », on entend que la ou chaque antenne dipolaire traverse le plan de masse de part en part.

Le dispositif selon l'invention peut comporter une ou plusieurs des caractéristiques suivantes.

Selon une caractéristique de l'invention, les premier et second brins de la ou chaque antenne dipolaire s'étendent suivant la normale au plan de masse.

Ainsi, un avantage procuré est de s'affranchir de la perturbation du diagramme de rayonnement de la ou chaque antenne dipolaire par le plan de masse.

Selon une caractéristique de l'invention, les premier et second brins de la ou chaque antenne dipolaire s'étendent de part et d'autre du plan de masse selon une symétrie planaire.

Par « symétrie planaire », on entend que le plan de masse forme un plan de symétrie pour les premier et second brins de la ou chaque antenne dipolaire.

Ainsi, un avantage procuré est de réduire la polarisation croisée *(« cross polarization »* en langue anglaise).

Selon une caractéristique de l'invention, les premier et second brins de la ou chaque antenne dipolaire présentent respectivement des première et seconde extrémités distales munies respectivement de premier et second toits capacitifs ; les premier et second toits capacitifs étant mis en court-circuit.

Par « extrémité distale », on entend l'extrémité la plus éloignée du plan de masse.

Ainsi, un avantage procuré par de tels toits capacitifs est la possibilité de réduire la taille des premier et second brins de la ou chaque antenne dipolaire.

Selon une caractéristique de l'invention, les premier et second toits capacitifs sont munis de fentes.

Ainsi, un avantage procuré par la présence de fentes est la possibilité de réduire la taille des toits capacitifs.

Selon une caractéristique de l'invention, les premier et second brins de la ou chaque antenne dipolaire sont imprimés sur un circuit imprimé.

Ainsi, un avantage procuré est la facilité de fabrication et le faible coût.

Selon une caractéristique de l'invention, le dispositif comporte des brins de court-circuit agencés pour mettre en court-circuit les premier et second toits capacitifs ; et les brins de court-circuit sont imprimés sur le circuit imprimé.

Ainsi, un avantage procuré est la facilité de fabrication et le faible coût.

Selon une caractéristique de l'invention, le dispositif comporte un ensemble d'antennes dipolaires s'étendant à travers le plan de masse, chaque antenne dipolaire de l'ensemble comprenant des premier et second brins s'étendant de part et d'autre du plan de masse.

Ainsi, un avantage procuré est de pouvoir former un réseau d'antennes dipolaires super-directif, dont la direction du faisceau peut varier dans le plan azimutal.

Selon une caractéristique de l'invention, le dispositif comporte :
- une première antenne dipolaire ;
- une seconde antenne dipolaire, présentant un couplage électromagnétique avec la première antenne dipolaire.

La seconde antenne dipolaire forme une antenne parasite permettant, grâce au couplage électromagnétique avec la première antenne dipolaire et à l'introduction d'impédances de charges adaptées au sein du circuit de commande, d'obtenir une antenne reconfigurable.

Selon une caractéristique de l'invention, l'ensemble d'antennes dipolaires comporte :
- une antenne dipolaire centrale, agencée au centre du plan de masse ;
- au moins un couple d'antennes dipolaires périphériques, agencé autour de l'antenne dipolaire centrale selon une symétrie centrale.

Ainsi, un avantage procuré par le ou les couples d'antennes dipolaires périphériques est de définir un angle d'ouverture pour le faisceau. On répartira le ou les couples d'antennes dipolaires périphériques sur le plan de masse, autour de l'antenne dipolaire centrale, selon les directions à privilégier en fonction de l'application envisagée. Chaque couple d'antennes dipolaires périphériques, agencé autour de l'antenne dipolaire centrale selon une symétrie centrale, définit une direction avec deux orientations possibles pour le rayonnement de l'antenne. Le ou les couples d'antennes dipolaires périphériques forment des antennes parasites permettant, grâce au couplage électromagnétique avec l'antenne dipolaire centrale et à l'introduction d'impédances de charges adaptées au sein du circuit de commande, d'obtenir une antenne super-directive.

Selon une caractéristique de l'invention, l'ensemble d'antennes dipolaires comporte quatre couples d'antennes dipolaires périphériques, agencés autour de l'antenne dipolaire centrale selon une symétrie centrale.

Ainsi, un avantage procuré est d'obtenir un angle d'ouverture de 45° pour le faisceau si l'on répartit uniformément les quatre couples d'antennes dipolaires périphériques autour de l'antenne dipolaire centrale, et avec des impédances de charges adaptées au sein du circuit de commande.

Selon une caractéristique de l'invention, les antennes dipolaires de l'ensemble sont espacées entre elles d'une distance inférieure ou égale à λ/2, de préférence inférieure ou égale à λ/5, où λ est la longueur d'onde de fonctionnement du dispositif.

Selon une caractéristique de l'invention, le dispositif comporte une unique antenne dipolaire, et le circuit de commande comporte des impédances de charges adaptées pour former une antenne reconfigurable.

Selon une caractéristique de l'invention, le dispositif présente une dimension caractéristique maximale inférieure ou égale à λ/2, où λ est la longueur d'onde de fonctionnement du dispositif.

L'invention concerne également un objet comportant un dispositif conforme à l'invention.

A titre d'exemples non limitatifs, l'objet peut être sélectionné dans le groupe comportant un objet connecté à Internet, un lecteur de radio-identification, un radar, un capteur, un équipement de compatibilité électromagnétique.

### Brève description des dessins

D'autres caractéristiques et avantages apparaîtront dans l'exposé détaillé de différents modes de réalisation de l'invention, l'exposé étant assorti d'exemples et de références aux dessins joints.
Figure 1 est une vue schématique en perspective d'un dispositif selon l'invention, illustrant un mode de réalisation avec une unique antenne dipolaire.
Figure 2 est une vue schématique en perspective d'un dispositif selon l'invention, illustrant un mode de réalisation avec une antenne dipolaire centrale et deux antennes dipolaires périphériques.
Figure 3 est une vue schématique en perspective d'un dispositif selon l'invention, illustrant un mode de réalisation avec une antenne dipolaire centrale et huit antennes dipolaires périphériques.
Figure 4 est une vue schématique en perspective illustrant un mode de réalisation d'une antenne dipolaire équipant un dispositif selon l'invention.
Figure 5 est une vue schématique en perspective illustrant un mode de réalisation d'une antenne dipolaire imprimée équipant un dispositif selon l'invention. Figure 5 est accompagnée d'un encart montrant, à l'échelle agrandie, la partie centrale de l'antenne dipolaire.
Figure 6 est une vue schématique illustrant un circuit de commande d'une antenne dipolaire équipant un dispositif selon l'invention.
Figure 7 est une vue schématique en perspective montrant, à l'échelle agrandie, un circuit de commande d'une antenne dipolaire équipant un dispositif selon l'invention.

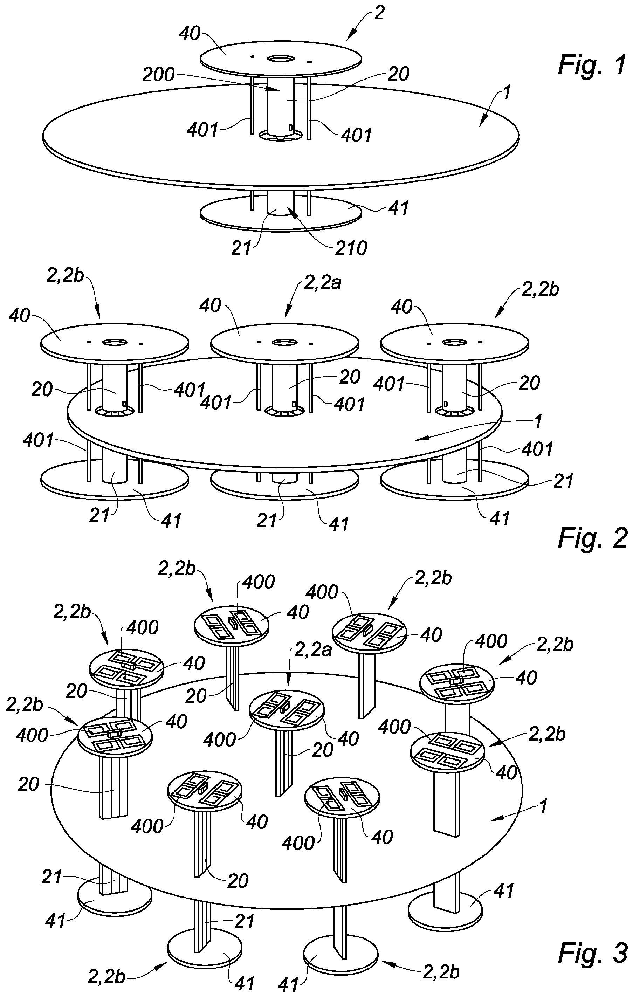

Il est à noter que les dessins décrits ci-avant sont schématiques par souci de lisibilité et pour simplifier leur compréhension. Ainsi, les brins 20, 21 de l'antenne dipolaire illustrés aux figures 1 et 2 ne sont pas mis en court-circuit, contrairement à ce que pourraient laisser croire leurs illustrations.

### Exposé détaillé des modes de réalisation

Les éléments identiques ou assurant la même fonction porteront les mêmes références pour les différents modes de réalisation, par souci de simplification.

Un objet de l'invention est un dispositif antennaire, comportant :
- un plan de masse 1, à potentiel flottant ;
- au moins une antenne dipolaire 2, s'étendant à travers le plan de masse 1, et comprenant des premier et second brins 20, 21 s'étendant de part et d'autre du plan de masse 1 ;
- un circuit de commande 3, agencé sur le plan de masse 1 pour commander la ou chaque antenne dipolaire 2.

### Plan de masse

Le plan de masse 1 peut être réalisé dans un matériau métallique, tel que le cuivre. Le plan de masse 1 peut être de forme circulaire, par exemple de diamètre λ/2, où λ est la longueur d'onde de fonctionnement de l'antenne. Cependant, le diamètre du plan de masse 1 peut être inférieur à λ/2. A titre d'exemple non limitatif, dans le cas d'une application de filtrage spatial en RFID dans la bande UHF (autour de 868 MHz), le diamètre du plan de masse 1 est de 18 cm.

Cependant, d'autres formes sont envisageables pour le plan de masse 1, telles qu'une forme rectangulaire ou carrée.

Le plan de masse 1 est à potentiel flottant, c'est-à-dire que le plan de masse 1 n'est pas soumis à un potentiel électrique de référence aux fréquences de fonctionnement du dispositif, par exemple dans le domaine des radiofréquences (entre 3 kHz et 300 GHz). Ainsi, le plan de masse 1 n'est pas « vu » par le dispositif à la ou aux fréquence(s) de fonctionnement.

Des ouvertures sont ménagées dans le plan de masse 1 de sorte que la ou chaque antenne dipolaire 2 peut s'étendre à travers le plan de masse 1. La ou chaque antenne dipolaire 2 est agencée de sorte que les premier et second brins 20, 21 se situent à distance du plan de masse 1, afin d'éviter tout contact avec le plan de masse 1. Toutefois, les premier et second brins 20, 21 peuvent être en contact avec le plan de masse 1 lorsque les premier et second brins 20, 21 s'étendent de part et d'autre du plan de masse selon une symétrie planaire. A titre d'exemple non limitatif, la ou chaque antenne dipolaire 2 peut être rendue solidaire du plan de masse 1 à l'aide d'une entretoise (non illustrée sur les figures), qui n'est pas électriquement conductrice.

Il est possible d'équiper le plan de masse 1 de composants, par exemple un circuit de courant continu (DC), un circuit radiofréquences (RF), ou encore une pile d'alimentation, et ce sans altérer le fonctionnement du dispositif.

### Structure d'une antenne dipolaire

Les premier et second brins 20, 21 de la ou chaque antenne dipolaire 2 s'étendent avantageusement suivant la normale au plan de masse 1. Les premier et second brins 20, 21 de la ou chaque antenne dipolaire 2 s'étendent avantageusement de part et d'autre du plan de masse 1 selon une symétrie planaire.

L'ensemble des premier et second brins 20, 21 de la ou chaque antenne dipolaire 2 présentent par exemple une hauteur de l'ordre de λ/5. A titre d'exemple non limitatif, dans le cas d'une application de filtrage spatial en RFID dans la bande UHF (autour de 868 MHz), la hauteur de l'ensemble des premier et second brins 20, 21 est de 7 cm.

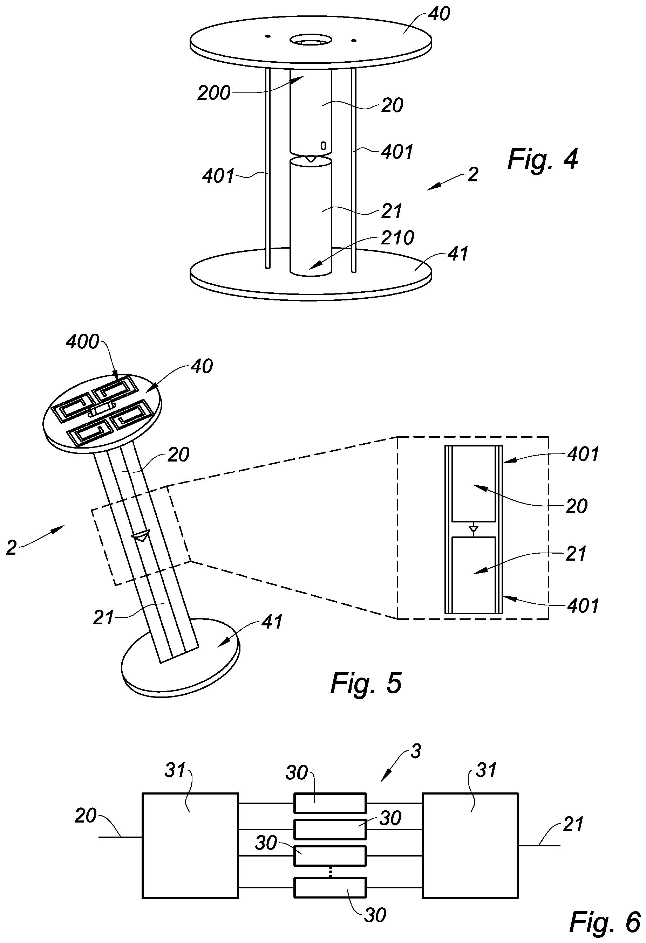

Avantageusement, les premier et second brins 20, 21 de la ou chaque antenne dipolaire 2 présentent respectivement des première et seconde extrémités distales 200, 210 munies respectivement de premier et second toits capacitifs 40, 41. Chaque toit capacitif 40, 41 s'étend suivant une direction perpendiculaire à la direction du brin 20, 21 correspondant. Les premier et second toits capacitifs 40, 41 sont mis en court-circuit, de préférence à l'aide de deux brins 401 de court-circuit, par exemple réalisés sous la forme de fils. Cependant, il est possible d'utiliser un nombre plus important de brins 401 de court-circuit, comme décrit dans le document US 6,750,825 B1. Dans un exemple ne faisant pas partie de l'objet revendiqué, les brins 401 de court-circuit peuvent être en contact avec le plan de masse 1. Chaque toit capacitif 40, 41 est de préférence de forme circulaire, avec un diamètre de l'ordre de λ/6. Toutefois, d'autres formes sont envisageables, telles qu'une forme carrée, rectangulaire, elliptique ou encore en étoile. Comme illustré aux figures 3 et 5, les premier et second toits capacitifs 40, 41 sont avantageusement munis de fentes 400. Les fentes 400 sont préférentiellement agencées en serpentin afin de réduire la dimension des toits capacitifs 40, 41.

Les premier et second brins 20, 21 de la ou chaque antenne dipolaire 2 sont préférentiellement réalisés dans un matériau métallique. Comme illustré aux figures 3 et 5, les premier et second brins 20, 21 de la ou chaque antenne dipolaire 2 peuvent être imprimés sur un circuit imprimé, par exemple de type Rogers RO3006^{®}. Comme illustré aux figures 3 et 5, les brins 401 de court-circuit, agencés pour mettre en court-circuit les premier et second toits capacitifs 40, 41 ; peuvent être imprimés sur le circuit imprimé. Les brins 401 de court-circuit, électriquement conducteurs, peuvent être réalisés sous la forme de fils, de rubans ou encore de pistes.

### Configuration d'un réseau d'antennes dipolaires

Comme illustré aux figures 2 et 3, l'antenne peut comporter un ensemble d'antennes dipolaires 2 s'étendant à travers le plan de masse 1, chaque antenne dipolaire 2 de l'ensemble comprenant des premier et second brins 20, 21 s'étendant de part et d'autre du plan de masse 1.

Selon un mode de réalisation (non illustré), l'ensemble d'antennes dipolaires 2 comporte :
- une première antenne dipolaire 2a ;
- une seconde antenne dipolaire 2b, présentant un couplage électromagnétique avec la première antenne dipolaire 2a.

La seconde antenne dipolaire 2b forme une antenne parasite permettant, grâce au couplage électromagnétique avec la première antenne dipolaire 2a et à l'introduction d'impédances de charges adaptées au sein du circuit de commande 3, d'obtenir une antenne reconfigurable.

L'ensemble d'antennes dipolaires 2 comporte avantageusement :
- une antenne dipolaire centrale 2a, agencée au centre du plan de masse 1 ;
- au moins un couple d'antennes dipolaires périphériques 2b, agencé autour de l'antenne dipolaire centrale 2a selon une symétrie centrale.

Il est à noter que la symétrie centrale permet de simplifier la conception du dispositif mais n'est pas essentielle à la résolution du problème technique.

Les antennes dipolaires 2 de l'ensemble sont avantageusement espacées entre elles d'une distance suffisamment faible (≤ 0,5 λ, où λ est la longueur d'onde de fonctionnement du dispositif) pour profiter des couplages électromagnétiques entre elles, et ce pour la formation d'un faisceau super-directif. A titre d'exemple, cette distance est de 0,15 λ dans l'application RFID proposée. Les antennes dipolaires 2 de l'ensemble sont avantageusement espacées entre elles d'une distance inférieure ou égale à λ/5, où λ est la longueur d'onde de fonctionnement du dispositif, afin d'obtenir la formation d'un faisceau super-directif.

A titre d'exemple non limitatif illustré à la figure 2, l'ensemble d'antennes dipolaires 2 peut comporter un couple d'antennes dipolaires périphériques 2b, agencé autour de l'antenne dipolaire centrale 2a selon une symétrie centrale.

A titre d'exemple non limitatif illustré à la figure 3, l'ensemble d'antennes dipolaires 2 peut comporter quatre couples d'antennes dipolaires périphériques 2b, agencés autour de l'antenne dipolaire centrale 2a selon une symétrie centrale. Les quatre couples d'antennes dipolaires périphériques 2b sont préférentiellement répartis uniformément autour de l'antenne dipolaire centrale 2a de manière à obtenir un angle d'ouverture de 45° pour le faisceau. Dans le cas d'une application de filtrage spatial en RFID dans la bande UHF (autour de 868 MHz), l'antenne selon l'invention présente un rayonnement directif avec une directivité maximale - selon une direction dite maximale- de 9,1 dBi (pour décibel isotrope) à 868 MHz dans le plan azimutal. Le faisceau de l'antenne est pincé dans la direction maximale avec un angle d'ouverture à -3 dB de 52°. L'antenne présente un gain supérieur à 6 dBi dans ladite direction maximale.

Il est possible d'augmenter le nombre de couples d'antennes dipolaires périphériques 2b de manière à réduire l'angle d'ouverture du faisceau.

Dans le cas illustré à la figure 1 d'une unique antenne dipolaire 2, le dispositif selon l'invention peut être reconfigurable, c'est-à-dire qu'au moins une caractéristique de l'antenne peut être modifiée au cours de sa durée de vie, après sa fabrication. La ou les caractéristiques généralement modifiables sont la réponse fréquentielle (en amplitude et en phase), le diagramme de rayonnement, et la polarisation. Le circuit de commande 3 comporte des impédances de charges adaptées pour former une antenne reconfigurable. A titre d'exemple, il est possible d'utiliser une capacité variable pour obtenir une réponse fréquentielle modifiable.

### Circuit de commande

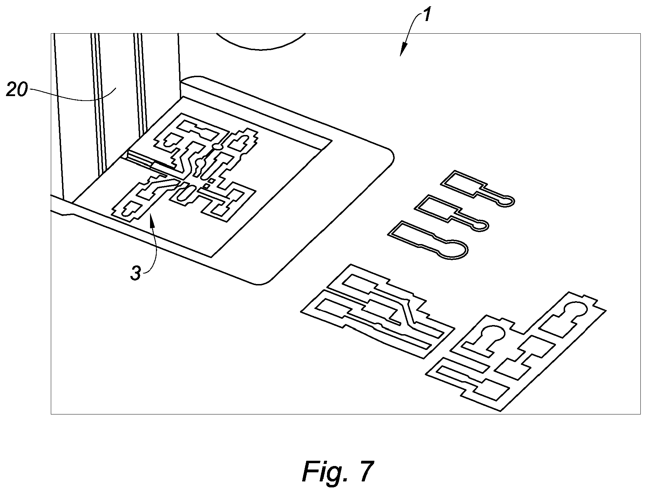

Comme illustré à la figure 7, le circuit de commande 3 est agencé sur le plan de masse 1 pour commander la ou chaque antenne dipolaire 2.

L'antenne dipolaire centrale 2a est préférentiellement alimentée en mode différentiel, et non en mode commun, en l'absence de masse. A cet effet, à titre d'exemple non limitatif, le circuit de commande 3 peut comporter deux transistors bipolaires connectés de manière croisée, comme décrit dans le document US 2017/0163224. Les collecteurs de chaque transistor bipolaire sont connectés aux bases de l'autre transistor de manière à former une boucle de rétroaction. Une impédance de charge est agencée dans la boucle formée par les deux transistors bipolaires de manière à obtenir une impédance négative flottante entre les émetteurs des deux transistors bipolaires. Les premier et second brins 20, 21 de l'antenne dipolaire centrale 2a sont connectés aux émetteurs des deux transistors bipolaires.

Comme illustré à la figure 6, le circuit de commande 3 est configuré pour affecter les impédances de charges 30 optimales aux premier et second brins 20, 21 de chaque antenne dipolaire périphérique 2b (dite antenne parasite), et ce afin d'obtenir le faisceau directif maximal dans une direction souhaitée. L'homme du métier sait calculer les impédances de charges optimales ; une procédure est notamment décrite dans le document US 2015/0054688. Les impédances de charges 30 peuvent être pilotées par exemple à l'aide d'interrupteurs 31. Les impédances de charges 30 peuvent présenter des parties réelles et/ou des parties imaginaires. A titre d'exemples non limitatifs, l'antenne dipolaire centrale 2a peut être alimentée par un circuit symétriseur appelé « Balun » et/ou peut être connectée à un circuit d'adaptation d'impédance *(matching network*).

### Objet équipé d'une antenne

L'invention concerne également un objet comportant un dispositif conforme à l'invention. A titre d'exemples non limitatifs, l'objet peut être sélectionné dans le groupe comportant un objet connecté à Internet, un lecteur de radio-identification, un radar, un capteur, un équipement de compatibilité électromagnétique.

L'invention ne se limite pas aux modes de réalisation exposés. L'homme du métier est mis à même de considérer leurs combinaisons techniquement opérantes, dans le cadre des revendications annexées.

## Revendications

1. Dispositif antennaire, configuré pour fonctionner à une fréquence de fonctionnement, et comportant :
- un plan de masse (1), à potentiel flottant, de sorte que le plan de masse (1) n'est pas soumis à un potentiel électrique de référence à la fréquence de fonctionnement ;
- au moins une antenne dipolaire (2), s'étendant à travers le plan de masse (1) de manière à traverser le plan de masse (1) de part en part, et comprenant des premier et second brins (20, 21) s'étendant de part et d'autre du plan de masse (1) ; les premier et second brins (20, 21) étant alimentés en mode différentiel de sorte que le plan de masse (1) n'est pas soumis à un potentiel électrique de référence à la fréquence de fonctionnement ;
- un circuit de commande (3), agencé sur le plan de masse (1) pour commander la ou chaque antenne dipolaire (2).

2. Dispositif selon la revendication 1, dans lequel les premier et second brins (20, 21) de la ou chaque antenne dipolaire (2) s'étendent suivant la normale au plan de masse (1).

3. Dispositif selon la revendication 1 ou 2, dans lequel les premier et second brins (20, 21) de la ou chaque antenne dipolaire (2) s'étendent de part et d'autre du plan de masse (1) selon une symétrie planaire.

4. Dispositif selon l'une des revendications 1 à 3, dans lequel les premier et second brins (20, 21) de la ou chaque antenne dipolaire (2) présentent respectivement des première et seconde extrémités distales (200, 210) munies respectivement de premier et second toits capacitifs (40, 41) ; les premier et second toits capacitifs (40, 41) étant mis en court-circuit.

5. Dispositif selon la revendication 4, dans lequel les premier et second toits capacitifs (40, 41) sont munis de fentes (400).

6. Dispositif selon l'une des revendications 1 à 5, dans lequel les premier et second brins (20, 21) de la ou chaque antenne dipolaire (2) sont imprimés sur un circuit imprimé.

7. Dispositif selon la revendication 6 en combinaison avec la revendication 4, comportant des brins (401) de court-circuit agencés pour mettre en court-circuit les premier et second toits capacitifs (40, 41) ; et les brins (401) de court-circuit sont imprimés sur le circuit imprimé.

8. Dispositif selon l'une des revendications 1 à 7, comportant un ensemble d'antennes dipolaires (2) s'étendant à travers le plan de masse (1), chaque antenne dipolaire (2) de l'ensemble comprenant des premier et second brins (20, 21) s'étendant de part et d'autre du plan de masse (1).

9. Dispositif selon l'une des revendications 1 à 8, comportant :
- une première antenne dipolaire (2a) ;
- une seconde antenne dipolaire (2b), présentant un couplage électromagnétique avec la première antenne dipolaire (2a).

10. Dispositif selon la revendication 8, dans lequel l'ensemble d'antennes dipolaires (2) comporte :
- une antenne dipolaire centrale (2a), agencée au centre du plan de masse (1) ;
- au moins un couple d'antennes dipolaires périphériques (2b), agencé autour de l'antenne dipolaire centrale (2a) selon une symétrie centrale.

11. Dispositif selon la revendication 10, dans lequel l'ensemble d'antennes dipolaires (2) comporte quatre couples d'antennes dipolaires périphériques (2b), agencés autour de l'antenne dipolaire centrale (2a) selon une symétrie centrale.

12. Dispositif selon la revendication 10 ou 11, dans lequel les antennes dipolaires (2) de l'ensemble sont espacées entre elles d'une distance inférieure ou égale à λ/2, de préférence inférieure ou égale à λ/5, où λ est la longueur d'onde de fonctionnement du dispositif.

13. Dispositif selon l'une des revendications 1 à 7, comportant une unique antenne dipolaire (2), et le circuit de commande (3) comporte des impédances de charges adaptées pour former une antenne reconfigurable.

14. Dispositif selon l'une des revendications 1 à 13, présentant une dimension caractéristique maximale inférieure ou égale à λ/2, où λ est la longueur d'onde de fonctionnement du dispositif.

15. Objet, comportant un dispositif selon l'une des revendications 1 à 14.

## Patentansprüche

1. Antennenvorrichtung, die für den Betrieb mit einer Betriebsfrequenz konfiguriert ist und Folgendes aufweist:
- eine Masseebene (1) mit schwebendem Potential, sodass die Masseebene (1) bei der Betriebsfrequenz keinem elektrischen Referenzpotential ausgesetzt ist;
- mindestens eine Dipolantenne (2), die sich durch die Masseebene (1) hindurch erstreckt, sodass sie die Masseebene (1) vollständig durchquert, und die einen ersten und einen zweiten Strang (20, 21) aufweist, die sich zu beiden Seiten der Masseebene (1) erstrecken; wobei der erste und der zweite Strang (20, 21) im differentiellen Modus gespeist werden, sodass die Masseebene (1) bei der Betriebsfrequenz keinem elektrischen Referenzpotential ausgesetzt ist;
- eine Steuerschaltung (3), die auf der Masseebene (1) angeordnet ist, um die oder jede Dipolantenne (2) zu steuern.

2. Vorrichtung nach Anspruch 1, wobei sich der erste und der zweite Strang (20, 21) der oder jeder Dipolantenne (2) senkrecht zur Masseebene (1) erstrecken.

3. Vorrichtung nach Anspruch 1 oder 2, wobei sich der erste und der zweite Strang (20, 21) der oder jeder Dipolantenne (2) beiderseits der Masseebene (1) gemäß einer planaren Symmetrie erstrecken.

4. Vorrichtung nach einem der Ansprüche 1 bis 3, wobei der erste und der zweite Strang (20, 21) der oder jeder Dipolantenne (2) jeweils erste und zweite distale Enden (200, 210) mit dem ersten bzw. zweiten kapazitiven Dach (40, 41) aufweisen; wobei das erste und das zweite kapazitive Dach (40, 41) kurzgeschlossen sind.

5. Vorrichtung nach Anspruch 4, wobei das erste und das zweite kapazitive Dach (40, 41) mit Schlitzen (400) versehen sind.

6. Vorrichtung nach einem der Ansprüche 1 bis 5, wobei der erste und der zweite Strang (20, 21) der oder jeder Dipolantenne (2) auf eine Leiterplatte aufgedruckt sind.

7. Vorrichtung nach Anspruch 6 in Kombination mit Anspruch 4, die Kurzschlussstränge (401) aufweist, die zum Kurzschluss des ersten und des zweiten kapazitiven Dachs (40, 41) angeordnet sind; wobei die Kurzschlussstränge (401) auf der Leiterplatte aufgedruckt sind.

8. Vorrichtung nach einem der Ansprüche 1 bis 7, die eine Anordnung von Dipolantennen (2) aufweist, die sich über die Masseebene (1) erstrecken, wobei jede Dipolantenne (2) der Anordnung einen ersten und einen zweiten Strang (20, 21) aufweist, die sich beiderseits der Masseebene (1) erstrecken.

9. Vorrichtung nach einem der Ansprüche 1 bis 8, die Folgendes aufweist:
- eine erste Dipolantenne (2a);
- eine zweite Dipolantenne (2b) mit elektromagnetischer Kopplung mit der ersten Dipolantenne (2a).

10. Vorrichtung nach Anspruch 8, wobei die Anordnung von Dipolantennen (2) Folgendes aufweist:
- eine zentrale Dipolantenne (2a), angeordnet in der Mitte der Masseebene (1);
- mindestens ein Paar peripherer Dipolantennen (2b), die zentralsymmetrisch um die zentrale Dipolantenne (2a) angeordnet sind.

11. Vorrichtung nach Anspruch 10, wobei die Anordnung von Dipolantennen (2) vier periphere Dipolantennenpaare (2b) aufweist, die zentralsymmetrisch um die zentrale Dipolantenne (2a) angeordnet sind.

12. Vorrichtung nach Anspruch 10 oder 11, wobei die Dipolantennen (2) der Anordnung mit einem Abstand von λ/2 oder kleiner, vorzugsweise kleiner oder gleich λ/5, voneinander getrennt sind, wobei λ die Betriebswellenlänge der Vorrichtung ist.

13. Vorrichtung nach einem der Ansprüche 1 bis 7, die eine einzige Dipolantenne (2) aufweist, wobei die Steuerschaltung (3) angepasste Lastimpedanzen aufweist, um eine rekonfigurierbare Antenne zu bilden.

14. Vorrichtung nach einem der Ansprüche 1 bis 13, die eine maximale charakteristische Abmessung von höchstens λ/2 aufweist, wobei λ die Betriebswellenlänge der Vorrichtung ist.

15. Gegenstand mit einer Vorrichtung nach einem der Ansprüche 1 bis 14.

## Claims

1. Antenna device, configured to operate at an operating frequency, and having:
- a ground plane (1) at floating potential, such that the ground plane (1) is not subjected to a reference electrical potential at the operating frequency;
- at least one dipole antenna (2), extending through the ground plane (1) so as to pass through either side of the ground plane (1), and comprising first and second strands (20, 21) extending on either side of the ground plane (1); the first and second strands (20, 21) being supplied with power in differential mode such that the ground plane (1) is not subjected to a reference electrical potential at the operating frequency;
- a control circuit (3), arranged on the ground plane (1) in order to control the or each dipole antenna (2).

2. Device according to Claim 1, wherein the first and second strands (20, 21) of the or each dipole antenna (2) extend along the normal to the ground plane (1).

3. Device according to Claim 1 or 2, wherein the first and second strands (20, 21) of the or each dipole antenna (2) extend on either side of the ground plane (1) with planar symmetry.

4. Device according to one of Claims 1 to 3, wherein the first and second strands (20, 21) of the or each dipole antenna (2) respectively have first and second distal ends (200, 210) respectively provided with first and second capacitive roofs (40, 41), the first and second capacitive roofs (40, 41) being short-circuited.

5. Device according to Claim 4, wherein the first and second capacitive roofs (40, 41) are provided with slots (400).

6. Device according to one of Claims 1 to 5, wherein the first and second strands (20, 21) of the or each dipole antenna (2) are printed on a printed circuit board.

7. Device according to Claim 6 in combination with Claim 4, having short-circuit strands (401) arranged so as to short-circuit the first and second capacitive roofs (40, 41); and the short-circuit strands (401) are printed on the printed circuit board.

8. Device according to one of Claims 1 to 7, having a set of dipole antennas (2) extending through the ground plane (1), each dipole antenna (2) of the set comprising first and second strands (20, 21) extending on either side of the ground plane (1).

9. Device according to one of Claims 1 to 8, having:
- a first dipole antenna (2a);
- a second dipole antenna (2b), having electromagnetic coupling to the first dipole antenna (2a).

10. Device according to Claim 8, wherein the set of dipole antennas (2) has:
- a central dipole antenna (2a), arranged in the centre of the ground plane (1);
- at least one pair of peripheral dipole antennas (2b), arranged around the central dipole antenna (2a) with central symmetry.

11. Device according to Claim 10, wherein the set of dipole antennas (2) has four pairs of peripheral dipole antennas (2b), arranged around the central dipole antenna (2a) with central symmetry.

12. Device according to Claim 10 or 11, wherein the dipole antennas (2) of the set are spaced from one another by a distance less than or equal to λ/2, preferably less than or equal to λ/5, where λ is the operating wavelength of the device.

13. Device according to one of Claims 1 to 7, having a single dipole antenna (2), and the control circuit (3) has matched load impedances in order to form a reconfigurable antenna.

14. Device according to one of Claims 1 to 13, having a maximum characteristic dimension less than or equal to λ/2, where λ is the operating wavelength of the device.

15. Object having a device according to one of Claims 1 to 14.
